# EUROPEAN PATENT SPECIFICATION

(11) **EP 1 304 914 B1**
(45) Date of publication and mention of the grant of the patent: **21.03.2007**
(21) Application number: 01949767.6
(22) Date of filing: 19.07.2001
(51) Int. Cl.: A01D 45/26

(54) **CABBAGE HARVESTING MACHINE**
KOHLERNTEMASCHINE
MACHINE DE RECOLTE DE CHOUX

(30) Priority: 28.07.2000 GB 0018454
(43) Date of publication of application: 02.05.2003
(73) Proprietor: Bolhuis, Martin Willem, 1771 RR Wieringerwerf (NL)
(72) Inventor: BOLHUIS, Martin, Willem, 1771 RR Wieringerwergf (NL); BOLHUIS, Peter, Thomas, S., N., R., 1771 RR Wieringerwergf (NL); BOLHUIS, Peter, Thomas, J., N., R., 1771 RR Wieringerwergf (NL)
(74) Representative: Pawlyn, Anthony Neil
(86) International application number: PCT/GB2001/003255
(87) International publication number: WO 2002/009497

(56) References cited:
- DE-A- 3 338 563
- DE-A- 4 240 805
- FR-A- 2 145 149
- US-A- 3 589 117
- US-A- 3 821 987

## Description

This invention relates to a cabbage harvesting machine.

As is well known, a cabbage harvesting machine or "cabbage harvester" is usually towed behind a tractor and has its operating components driven by a drive train taken from the tractor, in order to harvest the cabbages.

4240805 discloses a type of cabbage harvesting machine with the features of the preamble of claim 1.

Cabbages are usually grown in rows, and the forward end of the harvester has a cabbage lifting device which engages under the "head" of each cabbage, and also grips the stalk by means of a pair of endless gripper belts. The belts travel rearwardly, and thereby lift the stalks out of the ground and also convey the cabbages rearwardly to a stalk cutter device.

The cutter device cuts through the stalk at a position close to the underside of the head, and the separated stalk falls onto the ground, and the remainder of the crop (the head, at least some of the leaves, and usually a small portion of stalk projecting downwardly of the head) is then conveyed to the rear of the machine.

With current known designs of cabbage harvester, a travelling platform is provided at the rear of the harvester at which operatives are located in order to carry out final preparation of the harvested cabbages, which usually involves manual stripping of the remaining leaves on the head, and then placement of the cabbages onto a discharge conveyor. This then discharges the cabbages to a trailer running alongside the harvester. The trailer is usually provided with boxes or pallets into which the cabbages are loaded, and usually involves further operatives located on the trailer to carry out final cleaning / inspection of the cabbages before loading into the boxes.

When harvested cabbages are intended to be sold direct to a retailer, ready for rapid sale, it is usual to supply the cabbages with all of the leaves removed i.e. only the hard core or head of the cabbage remaining, and with as little as possible of the stalk projecting downwardly from the head. However, when the cabbages are intended to go first into a "cold store", it is usual to leave a small amount of leaf material covering at least the underside of the head. This has the advantage that (a) it protects the head from damage during further handling and (b) upon subsequent removal of the residual leaves from the cabbage (when they are being supplied to customers from the store), the head appears in a fresh form even although it may have been kept in store for a number of weeks or months.

During the transfer of cabbages which have been lifted out of the ground to the cutting station, it is important to try and maintain each cabbage upright, with the stalk projecting substantially vertically downwardly of the head, and the cutting device then desirably makes a substantially horizontal cut through the stalk, and as close to the underside of the head as possible. However, with existing machines the pair of endless gripper belts are the main means employed to transfer the cabbages rearwardly to the cutting station, and given the "top heavy" nature of a cabbage, and the substantial length of stalk projecting downwardly therefrom, in practice it is very difficult to ensure that the stalk of the cabbage is presented in a substantially vertical mode to the cutting station.

Evidently, if the stalk takes-up a significant angle to the vertical e.g. 10° or more, the cutting device will then make a horizontal cut, but which will not be perpendicular to the axis of the stalk. This is, at the very least, (a) unsightly, and not appealing to customers and (b) more usually, involves a cutting action slicing at least partly into the head of the cabbage. This substantially reduces the value of the cabbage, and for a premium market, can render the cabbage unsaleable.

The present invention therefore has been developed primarily with a view to providing improved handling of cabbages after they have been lifted out of the ground, and in particular to provide better presentation of the cabbages to the cutting station, so that more accurately controlled cutting actions can be made through the stalks, and provide a more satisfactory harvested product for supply to customers.

According to the invention there is provided a cabbage harvesting machine which comprises:
a housing having a forward receiving end and a rear discharge end, and in which the housing defines a path of travel for harvested cabbages;
a cabbage lifting device provided at the forward end of the housing and operative to engage under the head of a cabbage growing in the ground, and to grip the stalk in order to pull the cabbage out of the ground;
a stalk cutting device arranged along said path of travel through the housing, and operative to separate the stalk from the head of each cabbage;
a forward conveyor arrangement co-operating with the lifting device in order to convey cabbages to the cutting device with the head of each cabbage uppermost and the stalk projecting downwardly therefrom;
means permitting adjustment in height of the cutting action on each stalk; and,
a rear conveyor arrangement for conveying the cut cabbages from the cutting device to the rear discharge end of the housing;
characterised in that
   (a) the cabbages are guided through the cutting station in such a way that, after cutting of the stalks, the cabbages are inverted so as to be movable along the rear conveyor arrangement in an upside down state; and,
   (b) the rear conveyor arrangement comprises a lower surface which is engageable with the lower sides of the inverted cabbages, and an upper flexible endless mesh which is engageable with the upper sides of the inverted cabbages.

Preferably, the forward conveyor arrangement includes a lower arrangement of a pair of endless belts which are engageable with the stalks of the cabbages, and an upper flexible endless mesh which is engageable with the upper sides of the cabbages, after the cabbages have been pulled out of the ground, said mesh being formed of flexible flat strips having gentle but firm engagement with the upper sides of the cabbages in order to assist in guiding the cabbages rearwardly to the cutting device while maintaining a substantially upright attitude of the stalks.

In a particularly preferred embodiment of the invention, a common flexible endless mesh is guided so that its lower run forms part of the forward conveyor arrangement, and also forms part of the rear conveyor arrangement. In the forward conveyor arrangement, the mesh engages gently with the upper sides of cabbages which have been lifted out of the ground, while at the same time maintaining the depending stalks substantially vertical for presentation to the cutting device. The common mesh also engages the upper sides of the cabbages after the stalks have been cut and the cabbages have been inverted, so that they then engage what was previously the undersides of the cabbages.

The rear conveyor arrangement preferably has a lower endless belt which engages gently with the head of each cabbage (after inversion of the cabbage), and the common endless mesh engages with the leafy underside of the head (after inversion of the cabbage).

The endless mesh is made of flat strips, and preferably there is resilience built into the system (either by resilient yielding of the strips lengthwise and / or by providing spring connections along the sides of the mesh), and which allows the cabbages to be handled gently, but firmly, as they move through the housing i.e. up to the cutting station, and onwards from the cutting station.

The cutting station preferably comprises a pair of contra-rotating cutter discs, rotating in planes generally parallel to the surface of the ground. The cabbages are presented to the discs, with the stalks being received between the discs (and extending perpendicularly downwardly of the plane of the discs), and the stalk is then cut through neatly, at a required level relative to the head. The height of the cut will depend upon the required amount of protruding stalk to be left remaining attached to the cabbage, and whether any residual lower leaves are to be retained.

Adjustment in height of the cut can be carried out by providing vertical adjustment of a fork-shaped guide which conveys the cabbages (with the head of the cabbages above the guide and the stalks projecting down between the limbs of the guide) to the cutter discs.

The lower endless belt of the rear conveyor arrangement extends upwardly and rearwardly away from the cutter discs, and the geometry of the arrangement is such that the cabbages are guided so as to be inverted after the stalks have been cut, and so that the previously upper side of each cabbage is now lowermost and engages with the lower endless belt, whereas the previously lower side is now uppermost and engages with the overlying endless mesh.

The inversion of the cabbages, after cutting of the stalks, is preferably obtained by reason of the fact that the overhead run of the endless mesh engages the upper sides of the cabbages, and is the sole means to advance the cabbages to the rear conveyor arrangement. Therefore, the cabbages are caused to rotate so that the previously upper sides become the lower sides and move into engagement with the lower endless belt of the rear conveyor arrangement.

The endless mesh is an assembly of flat strips, but to improve the gripping action with the cabbages (while still giving gentle handling), each strip may have a pair of parallel spaced edge flanges.

A preferred embodiment of cabbage harvesting machine according to the invention will now be described in detail, by way of example only, with reference to the accompanying drawings, in which:
Figure 1 is a side view of a typical cabbage growing in a row of cabbages in the ground, and to be harvested by the machine;
Figure 2 is a schematic side view showing the forward end of a cabbage lifting device provided at a forward end of the harvesting machine, and which is operative to engage under the head of the cabbage growing in the ground, and to grip the stalk in order to pull the cabbage out of the ground;
Figure 3 is a plan view of the cabbage lifting device relative to a row of cabbages to be harvested;
Figure 4 is a schematic side view of a cabbage harvesting machine according to the invention, illustrating a forward conveyor arrangement which feeds cabbages which have been lifted out of the ground rearwardly to a cutting station, and a rear conveyor arrangement which is operative to convey cabbages, after cutting of their stalks, in an inverted mode to a rear discharge end of the machine;
Figure 4a is a detailed plan view, to an enlarged scale, of the cutting station, showing a pair of contra rotating cutter discs, and a fork shaped guide co-operating therewith to guide the cabbages from the forward conveyor arrangement to the cutter discs;
Figure 4b is a detail view, taken in the direction of the arrow X in Figure 4, showing the construction of an endless overlying mesh which co-operates with both the forward and the rear conveyor arrangements; and,
Figure 5 is a diagrammatic perspective illustration from the front of a cabbage harvesting machine during operation, harvesting a row of cabbages, and which after harvesting are then discharged to a loading trailer running alongside it.

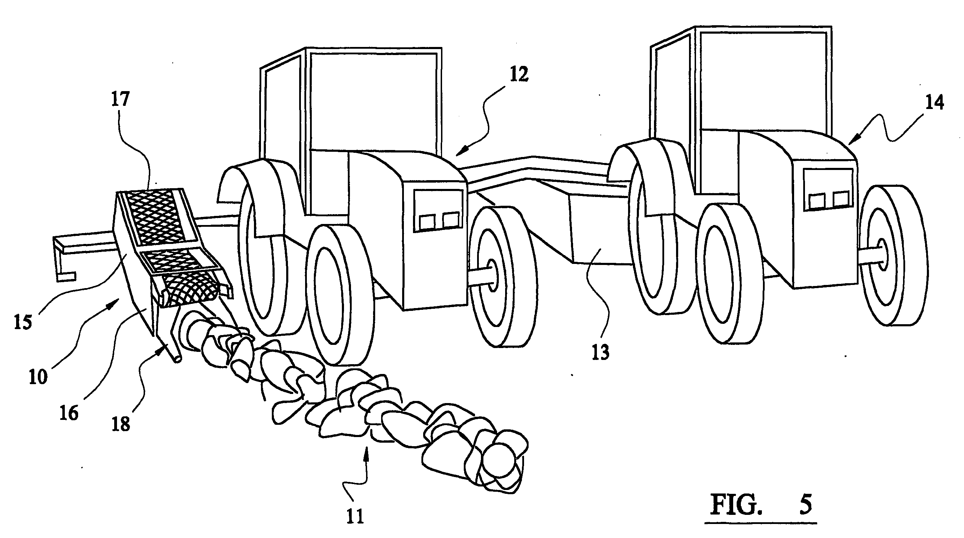

Referring first to Figure 5 of the drawings, a cabbage harvesting machine according to the invention is designated generally by reference 10 and which is propelled along a row of cabbages 11 growing in the ground by a tractor 12, and after harvesting of the cabbages, discharges them into a trailer 13 being towed alongside by a further tractor 14.

In a typical harvesting operation, as shown in Figure 5, two drivers are provided, one for each tractor 12 and 14, and usually two operatives, one at the rear of the harvesting machine 10, and the other on the trailer 13, to facilitate the final treatment of the harvested cabbages before they are deposited into boxes or other storage receptacles on the trailer. This compares with existing designs of cabbage harvesting machines, which typically require up to 8 personnel.

The harvesting machine 10 has a housing 15 which defines a path of travel for harvested cabbages passing along it, and the housing has a forward receiving end 16 and a rear discharge end 17, with the housing 15 defining a through-flow path of travel between receiving end 16 and discharge end 17.

A cabbage lifting device 18 is provided at the forward end 16 of the housing 15, and is operative to engage under the head of a cabbage growing in the ground, and to grip the stalk in order to pull the cabbage out of the ground.

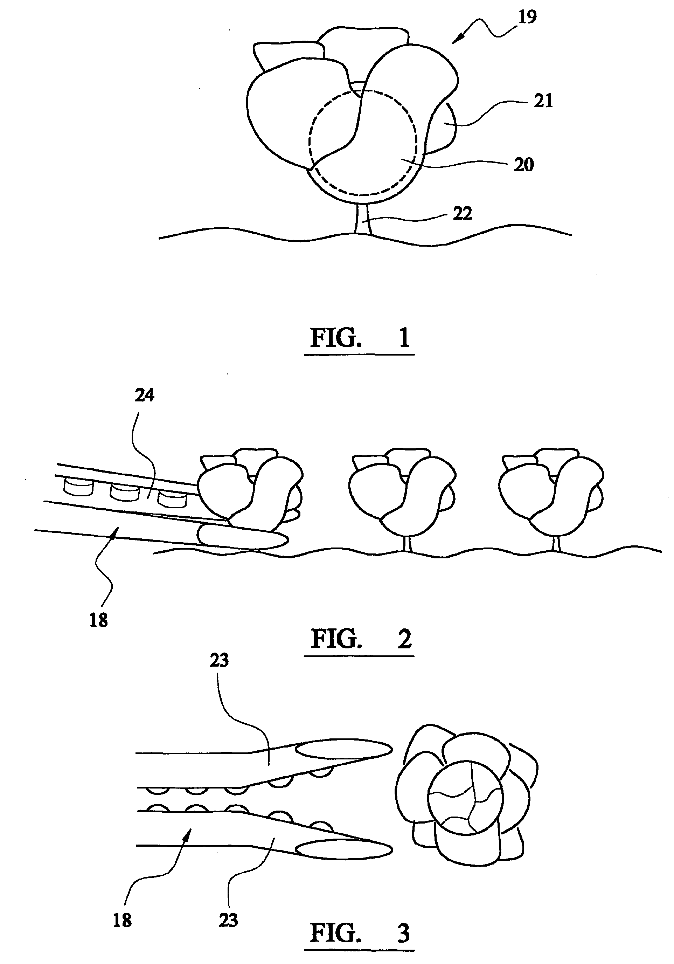

Figure 1 shows a typical cabbage 19 having a solid core or "head" 20, representing the edible part of the cabbage, surrounding leaves 21, and a downwardly projecting stalk 22 which is rooted in the ground.

Figure 2 is a diagrammatic side view showing how the lifting device 18 engages under the head 20 of a cabbage growing in the ground, and grips stalk 22 in order to pull the cabbage out of the ground. Figure 3 is a plan view of the lifting device 18 as it moves into engagement with a cabbage growing in the ground.

The lifting device 18 comprises a forwardly projecting fork having diverging limbs 23, and which engage under the crown 20 of each cabbage 19, in order to initiate a lifting operation. The limbs 23 each have an associated endless gripper belt 24, which engages with the stalk 22 as the harvesting machine 10 moves forwardly. Rearward movement of the gripper belts 24 pulls the stalk 22 out of the ground, and the cabbages are then conveyed through the housing 15 of the harvesting machine 10. Endless gripper belts are well known for use with cabbage harvesting machines, and need not be described in detail herein.

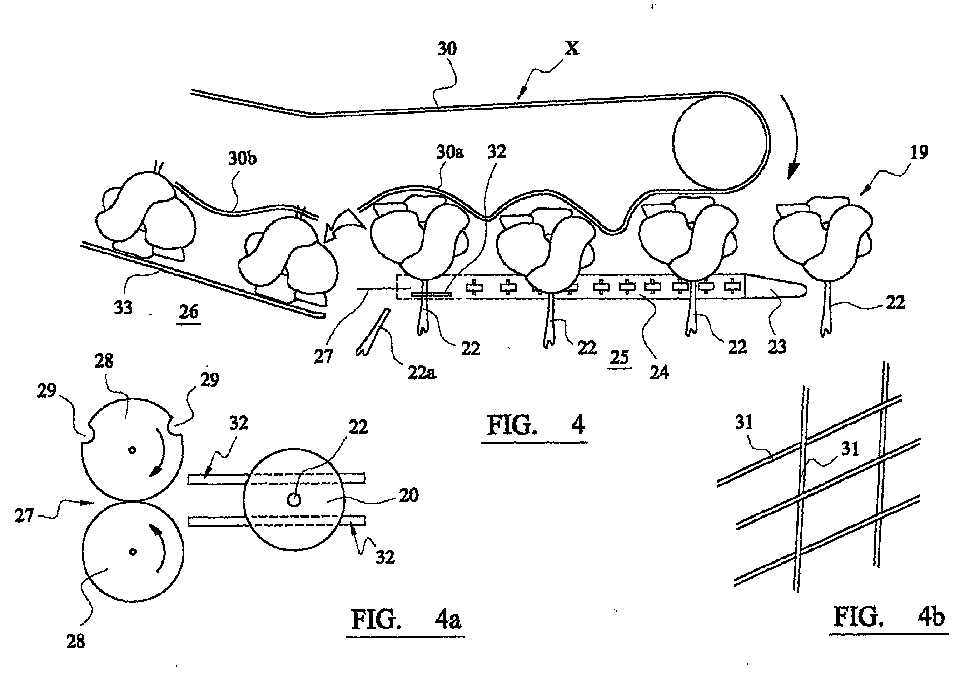

Referring now to Figure 4 of the drawings, this is a diagrammatic side view of the harvesting machine 10, and shows a forward conveyor arrangement, designated generally by reference 25 and a rear conveyor arrangement designated generally by reference 26. The forward conveyor arrangement 25 co-operates with the lifting device 18 in order to convey cabbages lifted out of the ground to a stalk cutting device 27. The stalk cutting device 27 comprises a pair of contra-rotating cutter discs 28, as shown in Figure 4a, and as shown one of the discs 28 has scallops 29 formed in its cutting edge, and which assist the cutting action on the stalks. The stalk cutting device 27 is therefore arranged along the path of travel of the cabbages through the housing i.e. between receiving end 16 and discharge end 17, and is operative to separate the stalk 22 from each cabbage. A severed stalk end is shown by reference 22a in Figure 4.

As can be seen in Figure 4, the forward conveyor arrangement 25 conveys cabbages 19 to the cutting device 27 with the head 20 of each cabbage uppermost and the stalk 22 projecting downwardly therefrom. The forward conveyor arrangement includes a lower conveyor arrangement, namely the pair of endless belts 24 which engage with the stalks 22 of the cabbages 19. There is also an upper endless flexible mesh 30 which is engageable with the upper sides of the cabbages 19, after the cabbages have been pulled out of the ground. The mesh 30 is formed of flexible flat strips 31, as shown in Figure 4b, having gentle but firm engagement with the upper sides of the cabbages 19 in order to assist in guiding the cabbages rearwardly to the cutting device 27, while maintaining a substantially upright attitude of the stalks. This is very important, since it is highly desirable to present the stalks 22 to the cutter discs 28 with the stalks 22 projecting substantially perpendicularly downwardly of the planes of the disc 28, so that a clean cut can be made through the stalk 22 at any required level just below the bottom of the head of the cabbage.

As shown in Figure 4a, a fork-shaped guide 32 guides the cabbages 19 from the forward conveyor arrangement 25 to the cutter discs 28, but to adjust the height of the cut through the stalk 22, preferably the guide 32 is vertically adjustable so as to vary the height of the cabbage relative to the cutter disc 28 as required.

The rear conveyor arrangement 26 comprises a lower surface 33 and an upper conveyor surface formed by a rearward extension of the endless mesh 30 (which also co-operates with the forward conveyor arrangement 24). The lower run of the endless mesh 30 therefore has a forward portion 30a which engages with the upper sides of the cabbages 19, and which gives gentle handling of the cabbages while maintaining a required upright attitude, when co-operating with the endless belts 24 of the forward conveyor arrangement 25. The lower run includes a rear portion 30b, which co-operates with lower conveyor surface 33 of the rear conveyor arrangement 26, but it will be noted that the cabbages are inverted, after cutting of the stalks 22, as they move from the cutting station to a lower receiving end of the rear conveyor arrangement 26. Therefore, the rear portion 30b of the endless mesh 30 engages with what was previously the underside of the cabbage, and which is shown protected by some residual leaves attached thereto, whereas the head of the cabbage (and possibly some protecting leaves) engages with the lower guide surface 33.

The guide surface 33 is preferably formed by an endless rubber conveyor band, which moves upwardly and rearwardly, and in combination with the rearward movement of the lower portion 30b of the endless mesh 30, this discharges the harvested cabbages to a rear discharge station, at which further cabbage cleaning and handling apparatus may be provided, although not shown or described in detail herein. The inversion of the cabbages 19, after cutting of the stalks, is an important aspect, in that residual leaves attached to the cabbage protect the head of the cabbage from damage, during engagement with the rear portion 30b of the endless mesh 30, whereas the (normally) upper surface of the head is either also protected by leaves, or makes gentle engagement with the conveyor band forming the lower guide conveyor surface 33. This therefore minimises risk of damage to the head of the cabbage, which is a very desirable aspect in the future sales of cabbages. A neat clean cut of the stalk is obtained, without damage into the body of the head of the cabbage.

The inversion of the cabbages 19, after cutting of the stalks 22a, is obtained by reason of the fact that the overhead run of the endless mesh 30a, 30b engages the upper sides of the cabbages 19 and is the sole means to advance the cabbages to the rear conveyor arrangement 26, after leaving the cutting station. Therefore, the cabbages 19 are caused to rotate so that the previously upper sides become the lower sides and move into engagement with the lower endless belt 33 of the rear conveyor arrangement 26.

When cabbages are being harvested with the intention of being delivered direct to the customer for immediate sale, it is usually desirable to supply the cabbages with the leaves entirely removed i.e. to supply the heads only, and in that case the cut through the stalk 22 will be as close to the underside of the head as is possible. This then allows the lower leaves to be stripped off at the rear of the machine, either manually, or by use of a leaf stripping device. However, if the cabbages which are being harvested are intended to be kept in a "cold store", then the cutting through the stalk 22 will be at a lower level relative to the head, so that at least the lower leaves will remain attached to the cabbage, and this is good for subsequent storage, in that the heads will be protected. When delivery from the cold store is required in the future, final cleaning and preparation action will be carried out, which will include removal of the protective leaves, and then a fresh head of the cabbage is delivered to the customer, even although it may have been in store for a matter of weeks or months.

## Claims

1. A cabbage harvesting machine (10) which comprises:
a housing (15) having a forward receiving end (16) and a rear discharge end (17), and in which the housing defines a path of travel for harvested cabbages;
a cabbage lifting device (18) provided at the forward end (16) of the housing (15) and operative to engage under the head (20) of a cabbage (19) growing in the ground, and to grip the stalk (22) in order to pull the cabbage out of the ground;
a stalk cutting device (27) arranged along said path of travel through the housing (15), and operative to separate the stalk (22a) from the head (22) of each cabbage (19);
a forward conveyor arrangement (25) co-operating with the lifting device (18) in order to convey cabbages (19) to the cutting device (27) with the head (20) of each cabbage (19) uppermost and the stalk (22) projecting downwardly therefrom;
means permitting adjustment in height of the cutting action on each stalk (22); and,
a rear conveyor arrangement (26) for conveying the cut cabbages from the cutting device (27) to the rear discharge end (17) of the housing (15);
**characterised in that**:
(a) the cabbages (19) are guided through the cutting station in such a way that, after cutting of the stalks (22a), the cabbages (19) are inverted so as to be movable along the rear conveyor arrangement (26) in an upside down state; and,
(b) the rear conveyor arrangement (26) comprises a lower surface (33) which is engageable with the lower sides of the inverted cabbages, and an upper flexible endless mesh (30b) which is engageable with the upper sides of the inverted cabbages.

2. A harvesting machine according to claim 1, in which the forward conveyor arrangement (25) includes a lower arrangement of a pair of endless belts (24) which are engageable with the stalks (22) of the cabbages (19), and an upper flexible endless mesh (30a) which is engageable with the upper sides of the cabbages (19), after the cabbages have been pulled out of the ground, said mesh (30a) being formed of flexible flat strips (31) having gentle but firm engagement with the upper sides of the cabbages in order to assist in guiding the cabbages rearwardly to the cutting device (27) while maintaining a substantially upright attitude of the stalks (22).

3. A harvesting machine according to any one of the preceding claims, including a common flexible endless mesh (30) which is guided so that its lower run (30a, 30b) forms part of the forward conveyor arrangement (25), and also forms part of the rear conveyor arrangement (26).

4. A harvesting machine according to claim 3, in which the rear conveyor arrangement (26) has a lower endless belt which engages gently with the head (20) of each cabbage (19), after inversion of the cabbage, and in which the common endless mesh (30) engages with the leafy underside of the head (20) after inversion of the cabbage.

5. A harvesting machine according to any one of the preceding claims, in which the endless mesh is made of flat strips, and having resilience built into the system, to allow the cabbages to be handled gently, but firmly, as they move through the housing from the receiving end (16) to the cutting station (27), and onwards from the cutting station to the rear discharge end (17).

6. A harvesting machine according to any one of the preceding claims, in which the cutting device comprises a pair of contra-rotating cutter discs (28), rotatable in planes generally parallel to the surface of the ground.

7. A harvesting machine according to claim 6, in which adjustment in height of the cut through the stalk (22a) can be carried out by providing vertical adjustment of a fork-shaped guide (32) which conveys the cabbages (19), with the head (20) of the cabbages (19) above the guide (32), and the stalks (22) projecting down between the limbs of the guide (32), to the cutter discs (28).

8. A harvesting machine according to any one of the preceding claims, in which the rear conveyor arrangement (26) has a lower endless belt which extends upwardly and rearwardly away from the cutter discs (27), and the geometry of the arrangement is such that the cabbages (19) are guided so as to be inverted after the stalks (22a) have been cut, and so that the previously upper side of each cabbage is now lowermost and engages with the lower endless belt, whereas the previously lower side is now uppermost and engages with the overlying endless mesh (30b).

9. A harvesting machine according to any one of the preceding claims, in which the endless mesh is an assembly of flat strips (31), and with each strip having a pair of parallel spaced edge flanges.

10. A harvesting machine according to claim 8, when appendant to claim 4, in which the endless mesh (30a, 30b) is the sole means to advance the cabbages (19) to the rear conveyor arrangement (26), after cutting of the stalks (22a) at the cutting station (27), whereby the cabbages (19) are caused to rotate so that the previously upper sides become the lower sides and move into engagement with the lower endless belt (33) of the rear conveyor arrangement (26).

## Patentansprüche

1. Erntevorrichtung (10) zum Ernten von Kohl, welche umfaßt:
ein Gehäuse (15) mit einem vorderen Aufnahmeende (16) und einem hinteren Abgabeende (17), wobei das Gehäuse einen Förderweg für geerntete Kohlköpfe begrenzt;
eine Kohlkopf-Hubeinrichtung (18), welche am vorderen Ende (16) des Gehäuses (15) angeordnet ist und derart arbeitet, daß sie unter dem Kopf (20) eines im Boden wachsenden Kohlkopf (19) angreift und den Strunk (22) ergreift, um den Kohlkopf aus dem Boden herauszuziehen;
eine Strunk-Schneideinrichtung (27), welche entlang dem Förderweg durch das Gehäuse (15) angeordnet ist und derart arbeitet, daß sie den Strunk (22a) vom Kopf (20) jedes Kohlkopfs (19) trennt;
eine vordere Förderanordnung (25), welche mit der Hubeinrichtung (18) zusammenarbeitet, um Kohlköpfe (19) zu der Schneideinrichtung (27) zu fördern, wobei der Kopf (20) jedes Kohlkopfs (19) zuoberst liegt und der Strunk (22) davon ausgehend nach unten ragt;
Mittel, welche es ermöglichen, die Höhe des Schneidvorganges an jedem Strunk (22) einzustellen; und
eine hintere Förderanordnung (26) zur Förderung der geschnittenen Kohlköpfe von der Schneideinrichtung (27) zum hinteren Abgabeende (17) des Gehäuses (15);
**dadurch gekennzeichnet, daß**
(a) die Kohlköpfe (19) derart durch die Schneideinrichtung geleitet werden, daß die Kohlköpfe (19) umgedreht werden, nachdem die Strünke (22a) abgeschnitten worden sind, so daß sie entlang der hinteren Förderanordnung (26) auf den Kopf gestellt förderbar sind; und
(b) die hintere Förderanordnung (26) eine untere Fläche (33), welche an den Unterseiten der auf den Kopf gestellten Kohlköpfe angreifen kann, sowie ein oberes flexibles Endlos-Maschengeflecht (30b) umfaßt, welches an den Oberseiten der auf den Kopf gestellten Kohlköpfe angreifen kann.

2. Erntevorrichtung nach Anspruch 1, bei welcher die vordere Förderanordnung (25) eine untere Anordnung eines Paares von Endlosbändern (24), welche an den Strünken (22) der Kohlköpfe (19) angreifen können, und ein oberes flexibles Endlos-Maschengeflecht (30a) umfaßt, welches an den Oberseiten der Kohlköpfe (19) angreifen kann, nachdem die Kohlköpfe aus dem Boden gezogen worden sind, wobei das Maschengeflecht (30a) aus flexiblen flachen Streifen (31) gebildet ist, welche einen schonenden, jedoch sicheren Griff an den Oberseiten der Kohlköpfe haben, um ein Führen der Kohlköpfe nach hinten zur Schneideinrichtung (27) zu unterstützen, während eine im wesentlichen aufrechte Stellung der Strünke (22) aufrecht erhalten wird.

3. Erntevorrichtung nach einem der vorhergehenden Ansprüche, welche ein gemeinsames flexibles Endlos-Maschengeflecht (30) aufweist, welches derart geführt ist, daß seine untere Bahn (30a, 30b) einen Teil der vorderen Förderanordnung (25) und außerdem einen Teil der hinteren Förderanordnung (26) bildet.

4. Erntevorrichtung nach Anspruch 3, bei welcher die hintere Förderanordnung (26) ein unteres Endlosband aufweist, welches schonend an dem Kopf (20) jedes Kohlkopfs (19) angreift, nachdem der Kohlkopf umgedreht worden ist, und bei welcher das gemeinsame Endlos-Maschengeflecht (30) an der blattbesetzten Unterseite des Kopfes (20) angreift, nachdem der Kohlkopf umgedreht worden ist.

5. Erntevorrichtung nach einem der vorhergehenden Ansprüche, bei welcher das Endlos-Maschengeflecht aus flachen Streifen gefertigt ist und eine in das System integrierte Spannkraft aufweist, so daß die Kohlköpfe schonend, jedoch sicher gehandhabt werden können, wenn sie sich von dem Aufnahmeende (16) durch das Gehäuse zu der Schneideinrichtung (27) und weiter von der Schneideinrichtung zum hinteren Abgabeende (17) bewegen.

6. Erntevorrichtung nach einem der vorhergehenden Ansprüche, bei welcher die Schneideinrichtung ein Paar gegenläufig rotierender Schneidscheiben (28) umfaßt, welche in Ebenen drehbar sind, die im wesentlichen parallel zur Oberfläche des Bodens sind.

7. Erntevorrichtung nach Anspruch 6, bei welcher die Einstellung der Höhe des Schnitts durch den Strunk (22a) dadurch durchgeführt werden kann, daß eine vertikale Einstellung einer gabelförmigen Führung (32) erfolgt, welche die Kohlköpfe (19) zu den Schneidscheiben (28) fördert, wobei der Kopf (20) der Kohlköpfe (19) oberhalb der Führung (32) liegen und die Strünke (22) nach unten zwischen die Arme der Führung (32) ragen.

8. Erntevorrichtung nach einem der vorhergehenden Ansprüche, bei welcher die hintere Förderanordnung (26) ein unteres Endlosband umfaßt, welches sich nach oben und nach hinten von den Schneidscheiben (28) weg erstreckt, wobei die Geometrie der Anordnung derart ist, daß die Kohlköpfe (19) so geführt werden, daß sie umgedreht werden, nachdem die Strünke (22a) abgeschnitten worden sind, und die vormals obere Seite jedes Kohlkopfs nun zuunterst ist und an dem unteren Endlosband angreift, während die vormals untere Seite nun zuoberst ist und an dem darüberliegenden Endlos-Maschengeflecht (30b) angreift.

9. Erntevorrichtung nach einem der vorhergehenden Ansprüche bei welcher das Endlos-Maschengeflecht eine Anordnung flacher Streifen (31) ist, wobei jeder Streifen ein Paar parallel voneinander beabstandeter Randkanten aufweist.

10. Erntevorrichtung nach Anspruch 8 unter Rückbezug auf Anspruch 4, bei welcher das Endlos-Maschengeflecht (30a, 30b) das einzige Mittel ist, um die Kohlköpfe (19) zur hinteren Förderanordnung (26) zu fördern, nachdem die Strünke (22a) in der Schneideinrichtung (27) abgeschnitten worden sind, wobei die Kohlköpfe (19) dazu gebracht werden, daß sie sich drehen, so daß die vormals oberen Seiten die Unterseiten werden und sich hin zu einem Angriff an das untere Endlosband (33) der hinteren Förderanordnung (26) bewegen.

## Revendications

1. Machine de récolte de choux (10) comprenant :
un logement (15) ayant une extrémité de réception avant (16) et une extrémité de décharge arrière (17), et dans laquelle le logement définit une trajectoire de déplacement pour les choux récoltés ;
un dispositif de levage des choux (18) prévu à l'extrémité avant (16) du logement (15) et fonctionnant de manière à s'engager sous la tête (20) d'un chou (19) cultivé dans le sol, et à saisir la tige (22) afin de tirer le chou hors du sol ;
un dispositif de coupe de tige (27) agencé le long de ladite trajectoire de déplacement à travers le logement (15), et fonctionnant de manière à séparer la tige (22a) de la tête (22) de chaque chou (19) ;
un dispositif de transport avant (25) coopérant avec le dispositif de levage (18) afin de transporter les choux (19) vers le dispositif de coupe (27) avec la tête (20) de chaque chou (19) vers le haut et la tige (22) se projetant de celle-ci vers le bas ;
des moyens permettant l'ajustement en hauteur de l'action de coupe sur chaque tige (22) ; et
un dispositif de transport arrière (26) pour transporter les choux coupés du dispositif de coupe (27) à l'extrémité de décharge arrière (17) du logement (15) ;
**caractérisée en ce que** :
(a) les choux (19) sont guidés à travers la station de coupe de telle manière qu'après la coupe des tiges (22a), les choux (19) sont renversés afin d'être déplacés, à l'envers, le long du dispositif de transport arrière (26) ; et
(b) le dispositif de transport arrière (26) comprend une surface inférieure (33) qui peut venir en prise avec les côtés inférieurs des choux renversés, et un grillage supérieur souple sans fin (30b) qui peut venir en prise avec les côtés supérieurs des choux renversés.

2. Machine de récolte selon la revendication 1, dans laquelle le dispositif de transport avant (25) comprend un dispositif inférieur d'une paire de courroies sans fin (24) pouvant venir en prise avec les tiges (22) des choux (19), et un grillage supérieur souple sans fin (30a) pouvant venir en prise avec les côtés supérieurs des choux (19), une fois que les choux ont été tirés hors du sol, ledit grillage (30a) étant formé de bandes plates souples (31) entrant délicatement mais fermement en prise avec les côtés supérieurs des choux afin de contribuer à guider les choux vers l'arrière jusqu'au dispositif de coupe (27) tout en maintenant les tiges (22) en position sensiblement droite.

3. Machine de récolte selon l'une quelconque des revendications précédentes, comprenant un grillage souple sans fin commun (30) qui est guidé de sorte que sa course inférieure (30a, 30b) fasse partie du dispositif de transport avant (25) et fasse également partie du dispositif de transport arrière (26).

4. Machine de récolte selon la revendication 3, dans laquelle le dispositif de transport arrière (26) a une courroie inférieure sans fin qui vient délicatement en prise avec la tête (20) de chaque chou (19), après le renversement du chou, et dans laquelle le grillage sans fin commun (30) vient en prise avec les feuilles situées sur le dessous de la tête (20) après le renversement du chou.

5. Machine de récolte selon l'une quelconque des revendications précédentes, dans laquelle le grillage sans fin est constitué de bandes plates, ayant une résilience intégrée au système, afin de permettre aux choux d'être manipulés délicatement, mais fermement, lorsqu'ils se déplacent à travers le logement de l'extrémité de réception (16) à la station de coupe (27), puis à nouveau de la station de coupe (27) à l'extrémité de décharge arrière (17).

6. Machine de récolte selon l'une quelconque des revendications précédentes, dans laquelle le dispositif de coupe comprend une paire de disques de coupe contrarotatifs (28), pouvant tourner dans des plans globalement parallèles à la surface du sol.

7. Machine de récolte selon la revendication 6, dans laquelle l'ajustement en hauteur de la coupe de la tige (22a) peut être effectué au moyen d'un ajustement vertical d'un guide en forme de fourche (32) qui transporte les choux (19), avec la tête (20) des choux (19) au-dessus du guide (32), et les tiges (22) se projetant vers le bas entre les branches du guide (32), vers les disques de coupe (28).

8. Machine de récolte selon l'une quelconque des revendications précédentes, dans laquelle le dispositif de transport arrière (26) a une courroie inférieure sans fin qui s'étend vers le haut et vers l'arrière en s'éloignant des disques de coupe (27), et la géométrie du dispositif est telle que les choux (19) sont guidés de manière à être renversés une fois que les tiges (22a) ont été coupées, et de sorte que le côté précédemment supérieur de chaque chou devienne désormais inférieur et vienne en prise avec la courroie inférieure sans fin, tandis que le côté précédemment inférieur devient désormais supérieur et vient en prise avec le grillage sans fin sus-jacent (30b).

9. Machine de récolte selon l'une quelconque des revendications précédentes, dans laquelle le grillage sans fin est un ensemble de bandes plates (31), chaque bande ayant une paire de bords relevés espacés de manière parallèle.

10. Machine de récolte selon la revendication 8, lorsqu'elle dépend de la revendication 4, dans laquelle le grillage sans fin (30a, 30b) constitue le seul moyen de faire avancer les choux (19) vers le dispositif de transport arrière (26), après la coupe des tiges (22a) à la station de coupe (27), les choux (19) étant mis en rotation de sorte que les côtés précédemment supérieurs deviennent les côtés inférieurs et viennent en prise avec la courroie inférieure sans fin (33) du dispositif de transport arrière (26).
